# EUROPÄISCHE PATENTSCHRIFT

(11) **EP 4 090 577 B1**
(45) Veröffentlichungstag und Bekanntmachung des Hinweises auf die Patenterteilung: **17.07.2024**
(21) Anmeldenummer: 21701263.2
(22) Anmeldetag: 18.01.2021
(51) Int. Cl.: B62D 25/14, B62D 21/15, B60R 21/045, B60K 37/00, B60K 35/00, B60K 37/10

(54) **COCKPIT FÜR EIN FAHRZEUG**
COCKPIT FOR A VEHICLE
POSTE DE PILOTAGE DE VÉHICULE

(30) Priorität: 23.01.2020 DE 102020200805
(43) Veröffentlichungstag der Anmeldung: 23.11.2022
(73) Patentinhaber: VOLKSWAGEN AKTIENGESELLSCHAFT, 38440 Wolfsburg (DE)
(72) Erfinder: SCHWEER, Marcus, 49176 Hilter (DE); SCHULTE, Franz-Josef, 49082 Osnabrück (DE); JAMAL EDDINE, Ali, 49191 Belm (DE)
(74) Vertreter: RGTH
(86) Internationale Anmeldenummer: PCT/EP2021/050958
(87) Internationale Veröffentlichungsnummer: WO 2021/148355

(56) Entgegenhaltungen:
- EP-A1- 0 456 531
- EP-A1- 1 032 528
- WO-A1-2013/035042
- DE-A1- 102011 009 605
- DE-A1- 102016 010 612
- US-B2- 6 890 016
- US-B2- 9 283 995

## Beschreibung

Die Erfindung betrifft ein Cockpit für ein Fahrzeug nach Anspruch 1.

Grundsätzlich ist es aus dem Stand der Technik bekannt, ein Cockpit im Frontbereich eines Fahrzeuges einzusetzen, das bei einem Frontalaufprall Kräfte aufnehmen soll, um die Insassen zu schützen.

So beschreibt beispielsweise JP 2012-210 907 A ein entsprechendes Cockpit, das ein Deformationselement aufweist.

Die EP 3 098 101 A1 zeigt ein Armaturenbrett eines Kraftfahrzeugs, das so angeordnet ist, dass es sich im Fall eines Aufpralls verformt.

Die WO 2013/035042 A1 zeigt einen vorderen Fahrgastraum eines Fahrzeugs. Der vordere Fahrgastraum umfasst eine Steuerhalterung, die an einer Brandwand des Fahrzeugs montiert ist, um ein Fahrzeugsteuerpedal zu montieren, und eine Lenkungshalterung, die an einem Fahrzeugquerträger des Fahrzeugs montiert ist, um eine Lenksäule zu montieren. Eine Rückhaltehalterung mit vorbestimmter Form, die auf der Oberseite der Steuerhalterung mit einem vorbestimmten Abstand von einem unteren Ende der Lenkungshalterung montiert ist, um ein Eindringen der Feuerwand und der Steuerhalterung während eines Frontalaufpralls des Fahrzeugs zu verhindern.

Bei Fahrzeugen mit kurzem Vorderwagen und/oder nach vorne reichendem Cockpit wird dieses bei einem Frontalaufprall durch die intrudierende Frontalcrashbarriere beaufschlagt und somit relativ stark belastet. Das Cockpit kann bei einem Frontalaufprall unter ungünstigen Umständen zusammen mit dem Beifahrerairbag in den Fahrgastraum verschoben werden.

Aufgabe der vorliegenden Erfindung ist es, ein Cockpit für ein Fahrzeug derart weiterzuentwickeln, dass die Verschiebung des Cockpits in den Fahrgastraum bei einem Frontalcrash verringert werden kann.

Gelöst wird die vorgenannte Aufgabe durch ein Cockpit für ein Fahrzeug, das ein erstes Modul mit einem Träger und ein zweites Modul mit einem Träger umfasst, wobei der Träger des zweiten Moduls in einer ersten Richtung hinter dem Träger des ersten Moduls angeordnet ist. Ferner ist der Träger des zweiten Moduls höher als der Träger des ersten Moduls angeordnet. Durch die Anordnungen des Trägers des ersten Moduls, und somit vorzugsweise des gesamten ersten Moduls, schiebt sich dieses in einem Crashfall mit einer Krafteinwirkung auf das erste Modul in die erste Richtung zumindest teilweise unter den Träger des zweiten Moduls.

Das Cockpit ist vorzugsweise in einem vorderen Bereich, insbesondere in einem Frontalbereich, des Fahrzeuges angeordnet. Insbesondere ist es unterhalb der Frontscheibe angeordnet. Bei einem Crashfall mit einer Krafteinwirkung auf das erste Modul in die erste Richtung handelt es sich somit um einen Frontalcrashfall. Ein Crashfall im Sinne der vorliegenden Patentanmeldung ist insbesondere als ein Frontalaufprall zu verstehen.

In einem Crashfall schiebt sich der Träger des ersten Moduls zumindest teilweise unter den Träger des zweiten Moduls. Dadurch wird die Verschiebung des Cockpits in den Insassenraum reduziert. Gewährleistet wird die Verschiebung des Trägers des ersten Moduls, und zwar zumindest teilweise unter den Träger des zweiten Moduls, dadurch, dass der Träger des zweiten Moduls in einer ersten Richtung hinter dem Träger des ersten Moduls angeordnet ist und höher als der Träger des ersten Moduls. Die Tiefe bzw. Höhe wird vor allem in einer zweiten Richtung bestimmt, die senkrecht zur ersten Richtung steht. Die erste Richtung erstreckt sich insbesondere in einer Längsrichtung des Fahrzeuges, während die zweite Richtung der Höhenrichtung des Fahrzeuges entspricht. Unter dem Begriff "Höhe" ist daher vorzugsweise die Ausdehnung in Höhenrichtung des Fahrzeuges gemeint.

Insbesondere sind der Träger des ersten Moduls und der Träger des zweiten Moduls in erster Richtung direkt hintereinander angeordnet. Insbesondere ist der Schwerpunkt des Trägers des zweiten Moduls höher angeordnet als der Schwerpunkt des Trägers des ersten Moduls. Ferner weist der Träger des ersten Moduls und der Träger des zweiten Moduls jeweils einen höchsten Punkt auf, wobei der höchste Punkt des Trägers des zweiten Moduls oberhalb des höchsten Punktes des Trägers des ersten Moduls liegt.

Bei einem Crashfall mit einer Krafteinwirkung auf das erste Modul in die erste Richtung schiebt sich der Träger des ersten Moduls in Richtung des Trägers des zweiten Moduls. Mit anderen Worten wird die Frontalcrashbarriere in Richtung des zweiten Moduls verschoben. Dadurch, dass sich der Träger des ersten Moduls unter den Träger des zweiten Moduls schiebt, kann die Verschiebung des Cockpits in den Insassenraum reduziert und auch gegebenenfalls das Risiko eines Aufbrechens der Cockpitstruktur gesenkt werden.

Erfindungsgemäß umschließt der Träger des zweiten Moduls zumindest teilweise einen Freiraum, wobei sich der Träger des ersten Moduls in dem Crashfall in den Freiraum schiebt. Dies trägt dazu bei, dass sich der Träger des ersten Moduls unter den Träger des zweiten Moduls schieben kann und somit die Verschiebung des gesamten Cockpits reduziert wird. Dabei ist der Träger des zweiten Moduls insbesondere derart ausgebildet, dass der Freiraum unterhalb des Trägers des zweiten Moduls angeordnet ist.

Der Träger des ersten Moduls trägt hauptsächlich zu der Steifigkeit des ersten Moduls bei. Der Träger besteht insbesondere aus glasfaserverstärktem Kunststoff. Neben dem Träger kann das erste Modul noch weitere Module bzw. Bauteile aufweisen, die mit dem Träger über Verbindungen, beispielsweise Clipse oder Verschweißungen befestigt sind. Auch das zweite Modul kann einen Träger aufweisen sowie vorzugsweise weitere Elemente, beispielsweise einen Airbag. Ferner kann das Cockpit noch einen Modulquerträger aufweisen, der das zweite Modul des Cockpits aufnimmt.

Insbesondere weist der Träger des ersten Moduls Sollknickstellen auf, sodass sich der Träger des ersten Moduls in dem Crashfall Z-förmig zusammenfaltet. Insbesondere faltet sich der Träger des ersten Moduls in dem Crashfall wie eine Ziehharmonika zusammen und reduziert somit maßgeblich die Verschiebung des Cockpits in den Insassenraum. Gewährleistet wird dies durch das Vorsehen von Sollknickstellen, damit sich das erste Modul vorhersehbar und kontrolliert deformiert. Das erste Modul dient somit hauptsächlich zur Aufnahme von Kräften in einem entsprechenden Crashfall und zum Abbau dieser durch Deformation. Dabei soll allerdings sichergestellt werden, dass sich das Cockpit insgesamt so wenig wie möglich in den Insassenraum verschiebt. Die Z-Faltung des ersten Moduls erstreckt sich insbesondere zumindest grob in erster Richtung. Insbesondere weist der Träger des ersten Moduls mindestens drei, vorzugsweise genau drei, Bereiche auf, wobei zwischen jeweils benachbarten Bereichen eine Sollknickstelle ausgebildet ist. Der Träger ist vor allem einstückig ausgebildet.

Die Sollknickstellen können durch eine geometrische Ausbildung des Trägers und/oder durch lokale Materialschwächung ausgebildet sein. Unter dem Begriff "geometrische Ausbildung" ist insbesondere zu verstehen, dass der Träger bereits vor dem Crashfall, d.h. in vorgefertigter Form, eine abgewinkelte Ausbildung aufweist, die dafür sorgt, dass sich der Träger an den bereits abgewinkelten Bereichen entsprechend faltet. Somit kann eine Z-Faltung durch die Geometrie des ersten Moduls zumindest angedeutet sein und sichergestellt werden, dass sich das erste Modul bei einem Aufprall mit einer Krafteinwirkung auf das erste Modul 12 in die erste Richtung 11 entsprechend "weiter" faltet.

Ferner kann eine verringerte Höhe des Trägers in zweiter Richtung eine geometrische Ausbildung darstellen und somit eine Sollknickstelle ausmachen.

Es können lokale Materialschwächungen ausgebildet sein, die dafür sorgen, dass sich das erste Modul an den entsprechenden Stellen faltet.

Insbesondere weist der Träger des ersten Moduls einen ersten Bereich auf, wobei der erste Bereich in einem Längsschnitt des Cockpits in erster Richtung und zweiter Richtung in einem Winkel zwischen 5° und 15°, vorzugsweise zwischen 7,5° und 12,5°, insbesondere in einem Winkel von etwa 10°, zur ersten Richtung steht.

Ferner kann der Träger des ersten Moduls einen zweiten Bereich aufweisen, der gegenüber dem ersten Bereich abgewinkelt ist. Insbesondere schließt der zweite Bereich einen Winkel mit der ersten Richtung ein, der zwischen 100° und 150°, insbesondere zwischen 120° und 130°, insbesondere etwa 125°, beträgt. Der erste Bereich und der zweite Bereich umschießen somit einen Winkel zueinander, der vorzugsweise zwischen 90° und 130°, insbesondere zwischen 110° und 120°, beträgt.

Ferner bevorzugt weist der Träger des ersten Moduls einen dritten Bereich auf, wobei der dritte Bereich einen Winkel mit der ersten Richtung einschließt, der zwischen 10° und 40°, insbesondere zwischen 20° und 30°, am meisten bevorzugt etwa 25°, beträgt. Der dritte Bereich und der zweite Bereich schließen somit zueinander einen Winkel zwischen 90° und 110°, insbesondere zwischen 95° und 105°, ein. Durch die abgewinkelte Ausbildung des Trägers des ersten Moduls werden Sollknickstellen zwischen den verschiedenen Bereichen gebildet.

Insbesondere sind das erste Modul und das zweite Modul durch das Eingreifen von Laschen des ersten Moduls und Ausnehmungen des zweiten Moduls miteinander verbunden. Bei den Laschen handelt es sich insbesondere um Blechlaschen. Sie sind insbesondere am Träger des ersten Moduls angeordnet. Die Laschen greifen in Ausnehmungen des zweiten Moduls, die vor allem am Träger des zweiten Moduls angeordnet sind. Das erste Modul und das zweite Modul sind somit durch Absteckung miteinander verbunden. Das zweite Modul fungiert als Gegenlager gegenüber dem ersten Modul bei einem Zusammenschieben des ersten Moduls. Durch die Anbindung des ersten Moduls an das zweite Modul wird das erste Modul in den Freiraum unter dem zweiten Modul gezogen.

Im ersten und/oder dritten Bereich kann der Träger des ersten Moduls ferner Auskragungen nach unten aufweisen. Die Auskragungen dienen als Luftführungskanäle.

Der Träger des ersten Moduls, insbesondere dessen erster Bereich, zweiter Bereich und dritter Bereich, umschließen bis auf die Auskragungen im ersten und dritten Bereich einen Höhenbereich. Der Träger des zweiten Moduls ist ebenfalls in diesem gesamten Höhenbereich angeordnet, wobei sich der Träger des zweiten Moduls aus dem Höhenbereich nach oben heraus erstreckt und somit insgesamt höher angeordnet ist, sodass das zweite Modul bzw. dessen Träger als Gegenlager agieren kann und sich somit der Träger des ersten Moduls auf der einen Seite Z-förmig zusammenklappen kann und auf der anderen Seite in den Freiraum unterhalb des Trägers des zweiten Moduls schieben kann.

Die Laschen zur Befestigung des ersten Moduls an dem zweiten Modul erstrecken sich insbesondere in erster Richtung, wobei sich der Träger des ersten Moduls in dem Crashfall derart zusammenfaltet, dass die Laschen aus den Ausnehmungen gezogen werden und sich die Verbindung zwischen dem ersten Modul und dem zweiten Modul löst. Gelöst wird die Verbindung insbesondere dadurch, dass durch die Zusammenfaltung die Laschen aus den Ausnehmungen gezogen werden.

Insbesondere weist der erste Bereich ein erstes Ende und ein zweites Ende auf, wobei er am zweiten Ende in den zweiten Bereich übergeht. Ferner weist der zweite Bereich ein erstes Ende und ein zweites Ende auf, wobei er an dem ersten Ende in den ersten Bereich und an seinem zweiten Ende in den dritten Bereich übergeht. Dabei faltet sich der Träger des ersten Moduls derart zusammen, dass sich das zweite Ende des ersten Bereichs aufstellt. Ferner wird auch das erste Ende des dritten Bereichs nach unten gedrückt, sodass sich dadurch die Laschen aus den Ausnehmungen ziehen. Insbesondere schiebt sich das erste Ende des dritten Bereichs beziehungsweise das zweite Ende des zweiten Bereichs in Richtung des ersten Endes des ersten Bereichs.

Ferner bezieht sich die Erfindung auch auf ein Fahrzeug umfassend ein oben beschriebenes Cockpit, wobei das Fahrzeug einen Frontalbereich aufweist, in dem das Cockpit angeordnet ist.

Es zeigen schematisch:
- Figur 1: eine Schnittdarstellung eines erfindungsgemäßen Cockpits entlang der ersten Richtung sowie der Höhenrichtung eines Fahrzeuges;
- Figur 2: eine detaillierte Ansicht des Verbindungsbereichs zwischen dem Träger des ersten Moduls und dem Träger des zweiten Moduls der Figur 1;
- Figur 3: eine perspektivische Ansicht des Trägers des ersten Moduls des Cockpits der Figur 1;
- Figur 4: eine perspektivische Ansicht auf einen Bereich des Trägers des ersten Moduls; und
- Figuren 5 und 6: eine Faltung des Trägers des ersten Moduls des Cockpits der Figur 1 in einem Crashfall mit einer Krafteinwirkung auf das erste Modul in die erste Richtung.

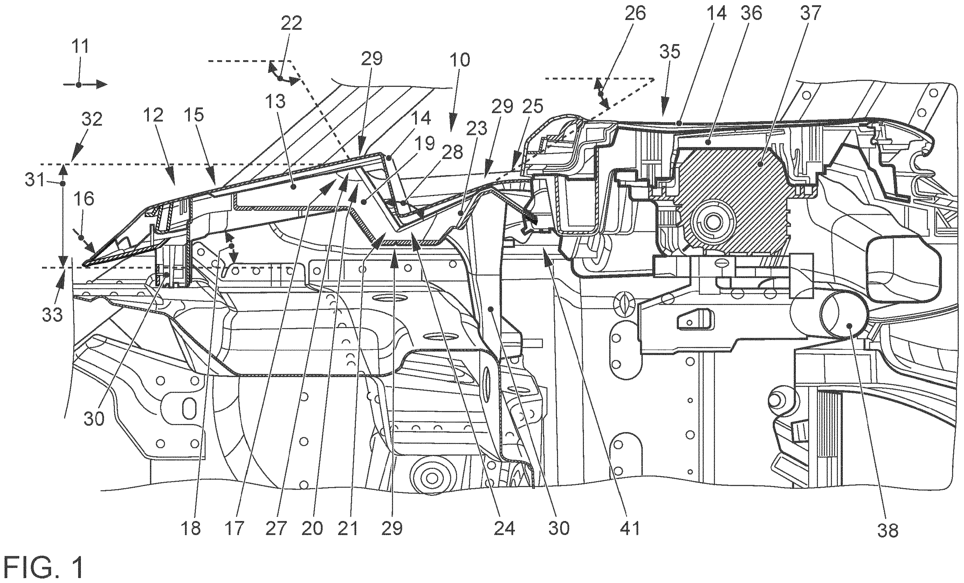

Figur 1 zeigt eine Schnittdarstellung eines erfindungsgemäßen Cockpits 10 entlang der ersten Richtung 11 sowie der Höhenrichtung eines Fahrzeuges.

Das Cockpit 10 weist ein erstes Modul 12 und ein zweites Modul 35 auf. Das erste Modul 12 umfasst einen Träger 13. Zudem weist das zweite Modul 35 einen Träger 36 auf. Ferner umfasst das erste Modul 12 ein Oberteil 14.

Der Träger 13 ist bereits abgewinkelt vorgeformt, sodass er sich bei einem Crashfall mit einer Krafteinwirkung auf das erste Modul 12 in die erste Richtung 11 Z-förmig zusammenfaltet. Der Träger 13 weist einen ersten Bereich 15 mit einem ersten Ende 16, das der ersten Richtung 11 zugewandt ist, und einem zweiten Ende 17 auf. Ferner weist der Träger 13 einen zweiten Bereich 19 mit einem ersten Ende 20 und einem zweiten Ende 21 auf und einen dritten Bereich 23 mit einem ersten Ende 24 und einem zweiten Ende 25.

Zwischen den entsprechenden Bereichen sind Sollknickstellen 29 ausgebildet. Diese sind durch eine geometrische Ausbildung des Trägers 13 ausgebildet. Und zwar schließt der erste Bereich 15 einen ersten Winkel 18 mit der ersten Richtung 11 ein, während der zweite Bereich 19 einen zweiten Winkel 22 mit der ersten Richtung 11 einschließt. Der dritte Bereich 23 schließt einen dritten Winkel 26 mit der ersten Richtung 11 ein. Ferner schließt der erste Bereich 15 mit dem zweiten Bereich 19 einen viertel Winkel 27 und der zweite Bereich 19 mit dem dritten Bereich 23 einen fünften Winkel 28 ein.

Der erste Bereich 15 des Trägers 13 weist Auskragungen 30 auf, die in Figur 1 nach unten ragen. Gleiches gilt für den dritten Bereich 23, der ebenfalls entsprechende Auskragungen 30 aufweist. Bis auf die Auskragungen 30 schließt der Träger 13 des ersten Moduls 12 einen Höhenbereich 31 mit einem oberen Ende 32 und einem unteren Ende 33 ein. Der Träger 36 des zweiten Moduls 35 ist mindestens auf der gesamten Höhe des Höhenbereichs 31 angeordnet und ragt über das obere Ende 32 des Höhenbereichs 31 hervor, sodass er insgesamt höher angeordnet ist als der Träger 13 des ersten Moduls 12.

Ferner kann das zweite Modul 35 einen Airbag 37 und einen Querträger 38 umfassen.

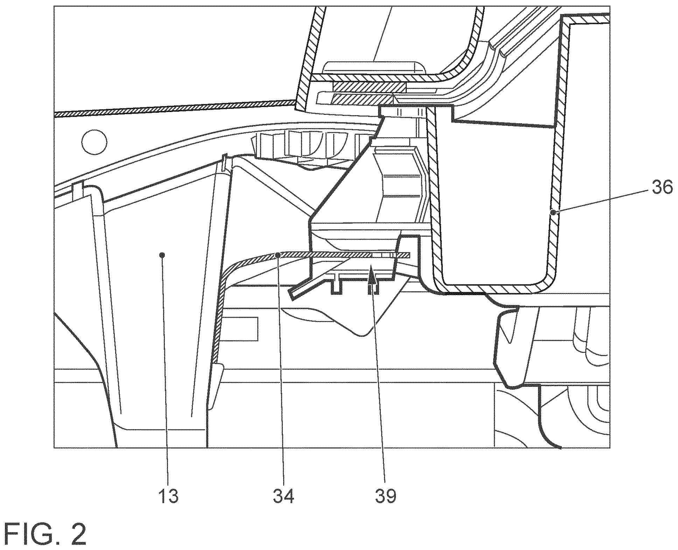

In Figur 2 ist eine detaillierte Ansicht des Verbindungsbereichs zwischen dem Träger 13 des ersten Moduls 12 und dem Träger 36 des zweiten Moduls 35 der Figur 1 gezeigt. Der Träger 13 des ersten Moduls 12 weist Laschen 34 auf, die in Ausnehmungen 39 des Trägers 36 des zweiten Moduls 35 greifen.

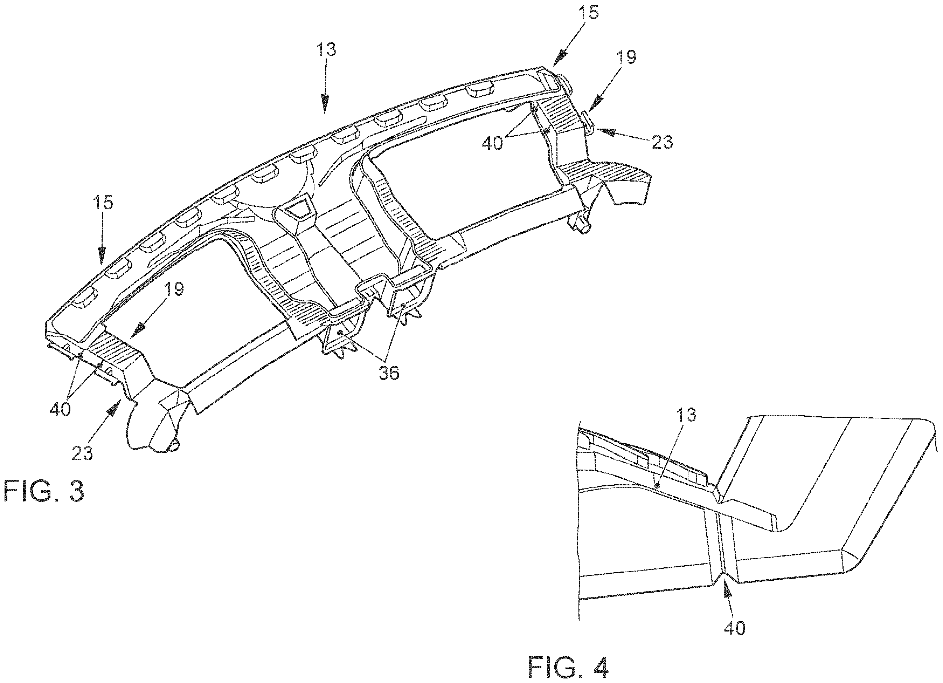

In Figur 3 ist eine perspektivische Ansicht des Trägers 13 des ersten Moduls 12 des Cockpits 10 gezeigt. Deutlich sind die Auskragungen 30 sowie die unterschiedlichen Bereiche zu sehen, und zwar der erste Bereich 15, der zweite Bereich 19 und der dritte Bereich 23 des Trägers 13. Dabei sind Materialschwächungen 40 vorgesehen, die zur Ausbildung entsprechender Sollknickstellen beitragen. Eine entsprechende Materialschwächung 40 ist beispielsweise auch in Figur 4 zu sehen, die eine perspektivische Ansicht auf einen Bereich des Trägers 13 des ersten Moduls 12 zeigt.

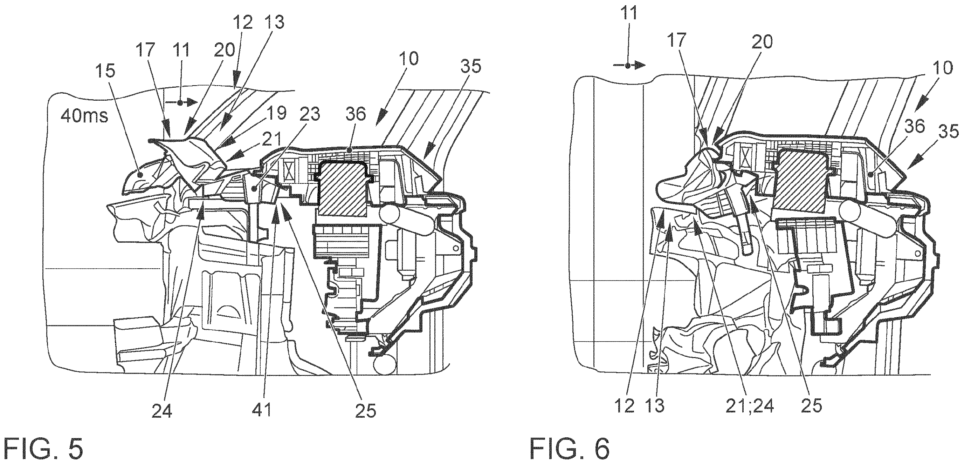

In den Figuren 5 und 6 ist gezeigt, wie sich der Träger 13 des ersten Moduls 12 des Cockpits 10 in einem Crashfall mit einer Krafteinwirkung auf das erste Modul 12 in die erste Richtung 11 zusammenfaltet. Und zwar ist dort zu sehen, wie sich das zweite Ende 17 des ersten Bereiches 15 nach oben schiebt, während sich, wie in Figur 6 zu sehen ist, das erste Ende 24 des dritten Bereichs 23 nach unten schiebt. Ferner schiebt sich das erste Ende 24 des dritten Bereichs 23 beziehungsweise das zweite Ende 21 des zweiten Bereichs 19 in Richtung des ersten Endes 16 des ersten Bereichs 15. Nach der Z-Faltung des ersten Moduls 12 an das zweite Modul 35, das als Gegenlager fungiert, wird das erste Modul 12 in den Freiraum 41 unter dem zweiten Modul 35 gezogen.

### Bezugszeichenliste

- 10: Cockpit
- 11: erste Richtung
- 12: erstes Modul
- 13: Träger
- 14: Oberteil
- 15: erster Bereich
- 16: erstes Ende des ersten Bereichs
- 17: zweites Ende des ersten Bereichs
- 18: erster Winkel
- 19: zweiter Bereich
- 20: erstes Ende des zweiten Bereichs
- 21: zweites Ende des zweiten Bereichs
- 22: zweiter Winkel
- 23: dritter Bereich
- 24: erstes Ende des dritten Bereichs
- 25: zweites Ende des dritten Bereichs
- 26: dritter Winkel
- 27: vierter Winkel
- 28: fünfter Winkel
- 29: Sollknickstelle
- 30: Auskragung
- 31: Höhenbereich
- 32: oberes Ende des Höhenbereichs
- 33: unteres Ende des Höhenbereichs
- 34: Laschen
- 35: zweites Modul
- 36: Träger
- 37: Airbag
- 38: Querträger
- 39: Ausnehmungen
- 40: Materialschwächung
- 41: Freiraum

## Patentansprüche

1. Cockpit (10) für ein Fahrzeug,
wobei das Cockpit (10) ein erstes Modul (12) mit einem Träger (13) und ein zweites Modul (35) mit einem Träger (36) umfasst,
wobei der Träger (36) des zweiten Moduls (35) in einer ersten Richtung (11) hinter dem Träger (13) des ersten Moduls (12) und höher als der Träger (13) des ersten Moduls (12) angeordnet ist,
sodass sich in einem Crashfall mit einer Krafteinwirkung auf das erste Modul (12) in die erste Richtung (11) der Träger (13) des ersten Moduls (12) zumindest teilweise unter den Träger (36) des zweiten Moduls (35) schiebt,
**dadurch gekennzeichnet, dass**
der Träger (36) des zweiten Moduls (35) zumindest teilweise einen Freiraum (41) umschließt,
wobei sich der Träger (13) des ersten Moduls (12) in dem Crashfall in den Freiraum (41) schiebt, sodass sich der Träger (13) des ersten Moduls (12) unter den Träger (36) des zweiten Moduls (35) schieben kann.

2. Cockpit (10) nach Anspruch 1,
**dadurch gekennzeichnet, dass**
der Träger (13) des ersten Moduls (12) Sollknickstellen (29) aufweist, sodass sich der Träger (13) des ersten Moduls (12) in dem Crashfall Z-förmig zusammenfaltet.

3. Cockpit (10) nach Anspruch 2,
**dadurch gekennzeichnet, dass**
der Träger (13) des ersten Moduls (12) mindestens drei Bereiche aufweist, wobei zwischen jeweils benachbarten Bereichen eine Sollknickstelle (29) ausgebildet ist.

4. Cockpit (10) nach einem der Ansprüche 2 oder 3,
**dadurch gekennzeichnet, dass**
die Sollknickstellen (29) durch eine geometrische Ausbildung des Trägers (13) und/oder durch lokale Materialschwächungen (40) ausgebildet sind.

5. Cockpit (10) nach Anspruch 4,
**dadurch gekennzeichnet, dass**
die geometrische Ausbildung eine abgewinkelte Ausbildung des Trägers (13) und/oder
und/oder eine verringerte Höhe des Trägers (13) ist.

6. Cockpit (10) nach einem der vorherigen Ansprüche,
**dadurch gekennzeichnet, dass**
das erste Modul (12) und das zweite Modul (35) durch das Eingreifen von Laschen (34) des ersten Moduls und Ausnehmungen (39) des zweiten Moduls (35) miteinander verbunden sind.

7. Cockpit (10) nach Anspruch 6,
**dadurch gekennzeichnet, dass**
sich die Laschen (34) in erster Richtung (11) erstrecken,
wobei sich der Träger (13) des ersten Moduls (12) in einem Crashfall mit einer Krafteinwirkung auf das erste Modul (12) in die erste Richtung (11) derart zusammenfaltet, dass die Laschen (34) aus den Ausnehmungen (39) gezogen werden und sich die Verbindung zwischen dem ersten Modul (12) und dem zweiten Modul (35) löst.

8. Fahrzeug, umfassend ein Cockpit (10) nach einem der vorherigen Ansprüche.

## Claims

1. Cockpit (10) for a vehicle,
wherein the cockpit (10) comprises a first module (12) with a support (13) and a second module (35) with a support (36),
wherein the support (36) of the second module (35) is arranged in a first direction (11) behind the support (13) of the first module (12) and higher than the support (13) of the first module (12),
so that in the event of a crash with a force acting on the first module (12) in the first direction (11), the support (13) of the first module (12) is pushed at least partially under the support (36) of the second module (35),
**characterized in that**
the support (36) of the second module (35) at least partially encloses a free space (41),
wherein the support (13) of the first module (12) slides into the free space (41) in the event of a crash, so that the support (13) of the first module (12) can slide under the support (36) of the second module (35).

2. Cockpit (10) according to claim 1,
**characterized in that**
the support (13) of the first module (12) has predetermined buckling points (29),
so that the support (13) of the first module (12) folds up in a Z-shape in the event of a crash.

3. Cockpit (10) according to claim 2,
**characterized in that**
the support (13) of the first module (12) has at least three areas,
wherein a predetermined buckling point (29) is formed between adjacent areas.

4. Cockpit (10) according to one of claims 2 or 3,
**characterized in that**
the predetermined buckling points (29) are formed by a geometric design of the support (13) and/or by local material weakening (40).

5. Cockpit (10) according to claim 4,
**characterized in that**
the geometric design is an angled design of the support (13) and/or and/or a reduced height of the support (13).

6. Cockpit (10) according to one of the preceding claims,
**characterized in that**
the first module (12) and the second module (35) are connected to one another by the engagement of tabs (34) of the first module and recesses (39) of the second module (35).

7. Cockpit (10) according to claim 6,
**characterized in that**
the tabs (34) extend in the first direction (11),
wherein the support (13) of the first module (12) folds in the first direction (11) in the event of a crash with a force acting on the first module (12) in such a way that the tabs (34) are pulled out of the recesses (39) and the connection between the first module (12) and the second module (35) is released.

8. Vehicle comprising a cockpit (10) according to any one of the preceding claims.

## Revendications

1. Cockpit (10) pour un véhicule
dans lequel le cockpit (10) comprend un premier module (12) avec un support (13) et un deuxième module (35) avec un support (36),
dans lequel le support (36) du deuxième module (35) est disposé dans une première direction (11) derrière le support (13) du premier module (12) et plus haut que le support (13) du premier module (12),
de sorte que, en cas de collision avec une force exercée sur le premier module (12) dans la première direction (11), le support (13) du premier module (12) se glisse au moins partiellement sous le support (36) du deuxième module (35),
**caractérisé en ce que**
le support (36) du deuxième module (35) entoure au moins partiellement un espace libre (41),
dans lequel le support (13) du premier module (12) se déplace dans l'espace libre (41) en cas de collision, de sorte que le support (13) du premier module (12) peut se déplacer sous le support (36) du deuxième module (35).

2. Cockpit (10) selon la revendication 1,
**caractérisé en ce que**
le support (13) du premier module (12) présente des points de flambage (29), de sorte que le support (13) du premier module (12) se replie en forme de Z en cas de collision.

3. Cockpit (10) selon la revendication 2,
**caractérisé en ce que**
le support (13) du premier module (12) comporte au moins trois zones,
un point de flambage (29) étant formé entre des zones respectivement voisines.

4. Cockpit (10) selon l'une des revendications 2 ou 3,
**caractérisé en ce que**
les points de flambage (29) sont formés par une configuration géométrique du support (13) et/ou par des affaiblissements locaux du matériau (40).

5. Cockpit (10) selon la revendication 4,
**caractérisé en ce que**
la configuration géométrique est une configuration coudée du support (13) et/ou et/ou une hauteur réduite du support (13).

6. Cockpit (10) selon l'une des revendications précédentes
**caractérisé en ce que**
le premier module (12) et le deuxième module (35) sont reliés entre eux par l'engagement de pattes (34) du premier module et d'évidements (39) du deuxième module (35).

7. Cockpit (10) selon la revendication 6,
**caractérisé en ce que**
les pattes (34) s'étendent dans la première direction (11),
le support (13) du premier module (12) se pliant dans la première direction (11) en cas de collision avec une force exercée sur le premier module (12) de telle sorte que les pattes (34) sont retirées des évidements (39) et que la liaison entre le premier module (12) et le deuxième module (35) se défait.

8. Véhicule comprenant un cockpit (10) selon l'une des revendications précédentes.
